# EUROPÄISCHE PATENTANMELDUNG

(11) **EP 2 294 911 A2**
(43) Veröffentlichungstag der Anmeldung: **16.03.2011**
(21) Anmeldenummer: 10175928.0
(22) Anmeldetag: 09.09.2010
(51) Int. Cl.: A01G 27/00

(54) **Bewässerungsvorrichtung**

(30) Priorität: 15.09.2009 CH 14252009
(71) Anmelder: aussenräume gmbH, 8627 Grüningen (CH)
(72) Erfinder: Wiesendanger, Urs, 8627, Grüningen (CH)
(74) Vertreter: Troesch Scheidegger Werner AG

(57) **Zusammenfassung**

Eine erfindungsgemässe Bewässerungsvorrichtung weist ein Füllventil (2), einen Schwimmer (5) und eine Wasserzufuhr (3) auf, wobei das Füllventil (2) mit einer Halterung (6) verbunden ist.

## Beschreibung

Die vorliegende Erfindung betrifft eine Bewässerungsvorrichtung für Pflanzen in Pflanzgefässen nach dem Oberbegriff von Anspruch 1. Weiter betrifft die Erfindung Pflanzgefäss nach dem Oberbegriff von Anspruch 11 sowie ein Schacht für eine Bewässerungsvorrichtung oder eine Bewässerungsvorrichtung und/oder ein Pflanzgefäss nach dem Oberbegriff von Anspruch 18. Herkömmliche Bewässerungsvorrichtungen weisen ein Füllventil, einen Schwimmer und eine Wasserzufuhr auf.

Eine Aufgabe der vorliegenden Erfindung bestand darin, eine Bewässerungsvorrichtung zu schaffen, welche Pflanzen einfach und zuverlässig mit Wasser versorgt.

Die Aufgabe wird erfindungsgemäss durch eine Bewässerungsvorrichtung mit den Merkmalen des kennzeichnenden Teils von Anspruch 1 gelöst. Weitere, erfindungsgemässe Ausführungsformen ergeben sich aus den Merkmalen der abhängigen Ansprüche .

Eine erfindungsgemässe Bewässerungsvorrichtung weist ein Füllventil, einen Schwimmer und eine Wasserzufuhr auf, wobei das Füllventil mit einer Halterung verbunden ist. Dadurch wird erreicht, dass die Pflanzen zuverlässig ohne unnötigen Wasserverbrauch mit Wasser versorgt werden können.

Eine weitere Ausführungsform ist, dass das Füllventil auf der Halterung aufgesteckt ist und wobei die Wasserzufuhr über einen Durchlass der Halterung hindurchgeführt ist oder dass das Füllentil innerhalb eines Schachtes montiert ist. Dadurch wird erreicht, dass die Bewässerungsvorrichtung resp. deren Bestandteile wie beispielsweise das Füllventil leicht zu reinigen und zu warten sind.

Eine weitere Ausführungsform ist, dass die Halterung in einem Schacht positioniert ist, wobei die Halterung mit einem Schachtboden verbunden ist oder wobei die Halterung direkt auf einem Boden eines Pflanzgefässes aufgebracht ist. Dadurch wird erreicht, dass die Halterung als Wasserüberlauf eingesetzt werden kann. Weiter kann ein maximaler Wasserstand für optimale die Bewässerung abhängig von Art des Pflanzgefässes bzw. der darin eingepflanzten Pflanzen nach Bedarf bei der Montage eingestellt werden.

Eine weitere Ausführungsform ist, dass der Schacht mit dem Schachtboden oder die Halterung mit dem Boden des Pflanzgefässes durch eine Klebverbindung, eine Schraubverbindung oder eine Gewindeverbindung miteinander verbunden sind. Dadurch wird eine einfache, standfeste Montage der Halterung gewährleistet.

Eine weitere Ausführungsform ist, dass der Schacht einteilig oder mit zwei teleskopartig ineinander verschiebbaren Elementen und einem abnehmbaren Deckel ausgebildet ist. Dadurch wird bewirkt, dass die erfindungsgemässe Bewässerungsvorrichtung für unterschiedliche Grössen von Pflanzgefässen eingesetzt werden kann. Weiter ist eine einfache Montage und Wartung der erfindungsgemässen Bewässerungsvorrichtung sichergestellt. Weiter wird dadurch erreicht, dass Verschmutzungen des Schachtes, beispielsweise durch Erde, praktisch verhindert werden können.

Eine weitere Ausführungsform ist, dass in einem unteren Bereich einer Schachtwand mindestens Schlitze und/oder mindestens ein Verbindungsteil, insbesondere eine Muffe, ausgebildet sind. Dadurch wird eine gute Wasserzirkulation zwischen dem Pflanzgefäss und dem Schacht erreicht. Falls an dem Verbindungsteil, beispielsweise ein Drainagewellenrohr angeschlossen wird, kann das Wasser auch in grossen Pflanzgefässen optimal zu den Wurzeln den Pflanzen geleitet werden.

Eine weitere Ausführungsform ist, dass der Schwimmer vertikal beweglich entlang der Halterung angeordnet ist. Dadurch wird eine einfache Wartung von Verschleissteilen ermöglicht. Weiter wird dadurch eine unerwünschte Blockierung durch Verklemmen des Schwimmers weitgehend verhindert.

Eine weitere Ausführungsform ist, dass ein Anzeigemittel mit dem Schwimmer verbunden ist. Dabei ist in einem mindestens teilweise mit Wasser gefüllten Zustand des Schachtes ein Zeiger des Anzeigemittels in einem Bereich unterhalb des Deckels positioniert und bei leerem Zustand des Schachtes, ist der Zeiger durch einen Durchbruch an einer Oberseite des Schachtes geführt. Oder ein anderes Anzeigemittel ist mit einem anderen Schwimmer verbunden. Dabei ragt ein bei in einem mindestens teilweise mit Wasser gefüllten Zustand des Schachtes erster Abschnitt eines anderen Zeigers des anderen Anzeigemittels durch den Durchbruch an der Oberseite des Schachtes heraus und bei leerem Zustand des Schachtes ragt, ein zweiter Abschnitt des anderen Zeigers durch den Durchbruch an der Oberseite des Schachtes hervor. Dabei ist der zweite Anschnitt oberhalb des ersten Abschnitts des weiteren Zeigers angeordnet. Dadurch wird erreicht, dass bei einem leeren Wasserreservoir respektive Schacht ein Defekt respektive die einwandfreie Funktionstüchtigkeit des Füllventils angezeigt wird.

Eine weitere Ausführungsform ist, dass ein Verschluss des Füllventilseinlasses sich schliesst, sobald der Schwimmer eine Oberkante der Halterung erreicht und dass der Verschluss des Füllventileinlasses sich öffnet, sobald der Schwimmer unterhalb der Oberkante positioniert ist. Dadurch wird erreicht, dass abhängig von einem Wasserstandpegel im Schacht die notwendige Wassermenge zugeführt werden kann oder bei Erreichen eines bestimmten Wasserstandpegels die Wasserzufuhr unterbrochen wird.

Eine weitere Ausführungsform ist, dass die Wasserzufuhr als Schlauch ausgebildet ist, welcher über eine Öffnung an der Halterung zu einem Füllventileinlass geführt ist. Dadurch wird eine einfache Wartung respektive Austausch von Verschleissteilen gewährleistet.

Eine weitere Ausführungsform ist, dass das Füllventil mindestens ein Zuflussloch sowie mindestens ein Abflussloch aufweisen, derart, dass das jeweilige Zuflussloch des Füllventils um entsprechenden Abflussloch versetzt angeordnet sind, insbesondere dass bei jeweils einem Zuflussloch und einem Abflussloch um ca. 180° versetzt zueinander oder dass bei zwei Zuflusslöchern und zwei Abflusslöchern um ca. 90° versetzt zueinander angeordnet sind. Oder das jeweilige mit einem Stutzen versehene Zuflussloch ist oberhalb des jeweiligen Abflusslochs angeordnet. Dadurch wird sichergestellt, dass das über das Füllventil zugeführte Wasser in den dafür vorgesehenen Schacht respektive das Pflanzgefäss eingebracht wird und ein unerwünschtes, frühzeitiges Ablaufen des Wassers, d.h. vor Erreichen des maximal bestimmten Wasserstandspegels über die Abflusslöcher verhindert werden kann.

Eine weitere Ausführungsform ist ein Pflanzgefäss, versehen mit einer erfindungsgemässen Bewässerungsvorrichtung. Dadurch wird erreicht, dass die Pflanzen zuverlässig ohne unnötigen Wasserverbrauch mit Wasser z. B auch in handelsüblichen Pflanzgefässen versorgt werden können.

Eine weitere Ausführungsform ist ein Pflanzgefäss mit einer erfindungsgemässen Bewässerungsvorrichtung versehen. Dabei ist das Pflanzgefäss erhöht von einem Untergrund positioniert und die Wasserzufuhr ist über einen Boden des Pflanzgefässes durch eine Öffnung im Pflanzgefäss geführt und die Wasserzufuhr ist weiter über den Durchlass der Halterung im Boden des Schachtes durch die Halterung geführt. Dadurch wird erreicht, dass die Wasserzufuhr, wie beispielsweise der Schlauch einfach im Untergrund, beispielsweise in Plattenfugen einer Terrasse, einfach und für den Benutzer praktisch nicht sichtbar verlegt werden kann.

Eine noch weitere Ausführungsform ist, dass das Pflanzgefäss mit mindestens einem weiteren Pflanzgefäss über die Wasserzufuhr, insbesondere den Schlauch verbunden ist. Dadurch wird erreicht, dass mehrere Pflanzgefässe gleichzeitig über eine erfindungsgemässe Bewässerungsvorrichtung mit Wasser versorgt werden können.

Eine weitere Ausführungsform ist, dass mindestens ein Teil eines Innenraums des Pflanzgefässes mit Drainrohren und/oder Drainmaterial ausgekleidet ist, inbesondere Steinwolle oder Schaumstoff oder Drainmatten oder Drainplatten. Dadurch kann das Wasser gleichmässig zum Wurzelbereich der Pflanzen geführt werden.

Ein weiterer Aspekt der Erfindung betrifft einen Schacht für eine Bewässerungsvorrichtung oder für ein Pflanzgefäss. Vorzugsweise ist der Schacht einteilig oder mit zwei teleskopartig ineinander verschiebbaren Elementen und einem abnehmbaren Deckel ausgebildet. Weiter weist ein Schachtboden eine Verbindungsöffnung auf und/oder sind in einem unteren Bereich einer Schachtwand mindestens Schlitze und/oder mindestens ein Verbindungsteil ausgebildet, insbesondere eine Muffe. Dadurch wird ermöglicht, dass bei Bedarf überschüssiges Wasser abgeführt werden kann. Weiter kann dadurch eine gute Wasserzirkulation zwischen dem Schacht und einem allfälligen benachbart angeordneten Schacht oder benachbartem Pflanzengefäss erreicht werden. Falls an dem Verbindungsteil, beispielsweise ein Drainagewellenrohr angeschlossen wird, kann das Wasser auch in grossen Pflanzgefässen optimal zu den Wurzeln den Pflanzen geleitet werden.

Eine weitere Ausführungsform ist, dass eine weitere Halterung mit der Verbindungsöffnung verbunden ist, insbesondere verschraubt und/oder, dass die Verbindungsöffnung mit einem Sieb versehen ist. Dadurch kann überschüssiges Wasser abgeführt werden. Weiter wird dadurch ein Verstopfen der Verbindungsöffnung verhindert.

Eine noch weitere Ausführungsform ist, dass der Schacht eine Trennwand aufweist. Dabei ist innerhalb eines Bereiches von zwei Bereichen ein mit dem Schwimmer verbundenes Anzeigemittel oder anderes Anzeigemittel angeordnet. Weiter ist ein Zeiger oder ein anderer Zeiger des entsprechenden Anzeigemittels durch den Durchbruch an der Oberseite des Schachtes bis über die Oberseite des Schachtes führbar.

Eine noch weitere Ausführungsform ist, dass eine Bewässerungsvorrichtung und/oder ein Pflanzgefäss mit einem erfindungsgemässen Schacht versehen sind.

Ausführungsbeispiele der vorliegenden Erfindung werden nachstehend anhand von Figuren noch näher erläutert. Es zeigen
- Fig. 1: schematisch, ein Seitenschnitt durch ein Pflanzgefäss versehen mit einer erfindungsgemässen Bewässerungsvorrichtung;
- Fig. 2: schematisch, ein Seitenschnitt durch eine erfindungsgemässe Bewässerungsvorrichtung bei geöffnetem Füllventil;
- Fig. 3: schematisch, ein Seitenschnitt durch eine erfindungsgemässe Bewässerungsvorrichtung bei geschlossenem Füllventil;
- Fig. 4: schematisch, ein vergrösserten Ausschnitt eines Seitenschnitts durch eine erfindungsgemässe Bewässerungsvorrichtung bei starkem Regen;
- Fig. 5: schematisch, ein Seitenschnitt einer erfindungsgemässen Bewässerungsvorrichtung bei einem leeren Schacht.
- Fig. 6a: schematisch, ein vergrösserter Abschnitts eines Seitenschnitts durch eine Halterung und ein Füllventil einer erfindungsgemässen Bewässerungsvorrichtung;
- Fig. 6b: schematisch, ein weiterer Seitenschnitt gemäss Figur 6a;
- Fig. 7: schematisch, ein Schacht für eine erfindungsgemässe Bewässerungsvorrichtung oder für ein Pflanzgefäss; und
- Fig. 8: schematisch, ein Schacht für eine weitere erfindungsgemässe Bewässerungsvorrichtung oder für ein Pflanzgefäss.

An dieser Stelle ist festgehalten, dass jeweils ein zu einer Figur eingeführte Bezugszeichen sich auf das gleiche Merkmal für das in anderen Figuren gleiche verwendete Bezugszeichen bezieht.

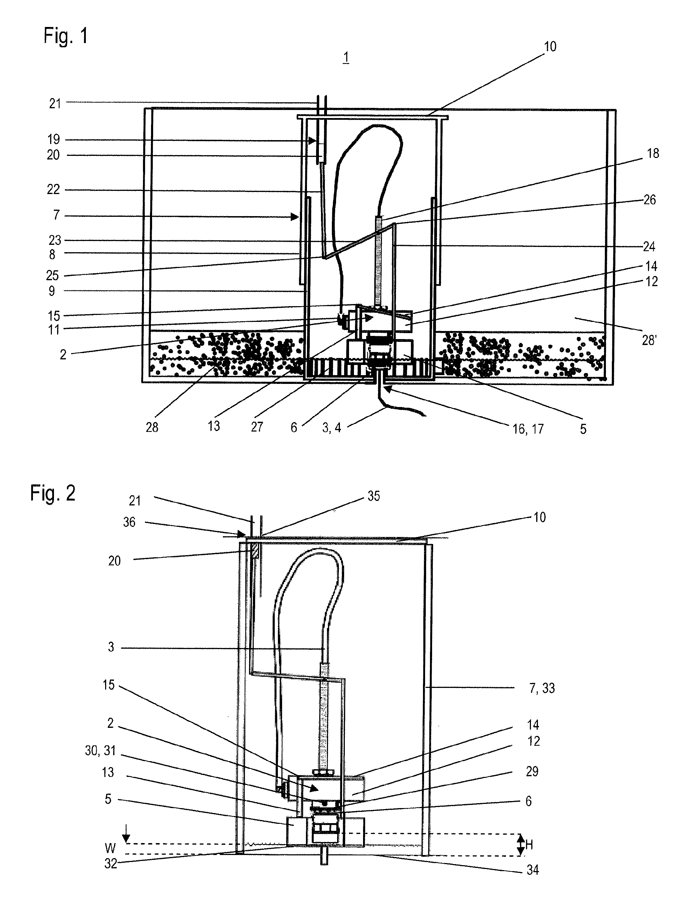

In Figur 1 ist schematisch, ein Seitenschnitt durch ein Pflanzgefäss 1, welches mit einer erfindungsgemässen Bewässerungsvorrichtung versehen ist gezeigt. Dabei ist ein Füllventil 2, eine Wasserzufuhr 3 in Form eines Schlauchs 4, ein Schwimmer 5 und eine Halterung 6, wobei die Halterung 6 in einen Boden eines Schachtes 7 integriert ist, dargestellt. Die Halterung 6 dient einerseits zur Befestigung am Boden des Schachtes 7. Dabei kann die in den Schacht 7 integrierte Halterung 6 über eine Klebverbindung oder eine Schraubverbindung mit einem Boden des Pflanzgefässes 1 verbunden sein. Es ist aber auch denkbar, dass die Halterung 6 bei einem bodenlosen Schacht (nicht dargestellt in Figur 1) direkt auf dem Boden des Pflanzgefässes 1 befestigt wird. Dabei ist die Halterung 6 über eine Klebe- oder eine Schraub- oder Gewindeverbindung mit dem Pflanzgefäss 1 solide verbunden. Der Schacht 7 besteht beispielsweise aus einem Polymer und/oder rostfreiem Edelstahl. Andererseits dient die Halterung 6 zum Abführen von überschüssigem Wasser. Der Schwimmer 5 ist annähernd ringförmig ausgebildet und umschliesst vertikal beweglich die Halterung 6. Weiter ist in Figur 1 der zweiteilig ausgebildete Schacht 7 mit zwei teleskopartig ineinander verschiebbare Elementen 8, 9 dargestellt. Der in Figur 1 gezeigte Schacht 7 ist mit einem abnehmbaren Deckel 10 versehen. Das Füllventil 2 weist einen Füllventileinlass 11, einen Füllventilkörper 12 auf. Zwei Schenkel 13, 14 bilden eine Gelenkverbindung 15 zwischen dem Schwimmer 5 und dem Füllventil 2. Der Schlauch 4 ist über eine Öffnung 16 des Pflanzgefässes 1 in einen Durchlass 17 der Halterung 6 durch die Halterung 6 hindurch geführt. Ein Führungsrohr 18 schliesst an die Halterung 6 an. Dabei ragt der Schlauch 4 bogenförmig aus dem Führungsrohr 18 hervor und mündet in den Füllventileinlass 11 des Füllventils 2. Weiter ist der Schlauch 4 beispielsweise als ein 4/6mm-Schlauch ausgebildet. Es sind auch andere Durchmesser denkbar. Weiter ist in Figur 1 ein Anzeigemittel 19 gezeigt. Das Anzeigemittel 19 weist einen Zeiger 20, welcher durch ein transparentes Schauglas 21 des Anzeigemittels 19 geführt ist auf. Drei beweglich miteinander verbundene Elemente 22, 23, 24 bilden zwei weitere Gelenkverbindungen 25, 26 zwischen dem Schwimmer 5 und dem Zeiger 20. Bei ausreichendem Wasserstand ist der Zeiger 20 im von aussen nicht sichtbaren Bereich des Schauglases 21 positioniert, d.h. der Zeiger 20 befindet sich unterhalb des Deckels 10 des Schachtes 7. Weiter sind in Figur 1 Schlitze 27 des Schachtes 7 dargestellt, durch welche das Wasser in das Pflanzgefäss 1 zirkulieren kann. Das Pflanzgefäss 1 ist beispielsweise mit Erde 28 oder einem beliebig anderen Substrat (nicht dargestellt) oder Drainmaterial und/ oder Drainrohren (beides nicht dargestellt) mindestens einem unteren Teil eines Innenraums 28' des Pflanzgefässes 1 versehen, worin Wurzeln von Pflanzen (nicht dargestellt in Figur 1) verankert sind. Das Drainmaterial ist beispielsweise in Form von Schaumstoff oder Drainmatten oder Drainplatten.

Figur 2 zeigt schematisch, ein Seitenschnitt durch eine erfindungsgemässe Bewässerungsvorrichtung bei geöffnetem Füllventil 2. Dabei liegt ein Wasserstandspegel W unterhalb einer maximalen Wasserfüllhöhe H. Unter der maximalen Wasserfüllhöhe H ist diejenige Wasserfüllhöhe zu verstehen, bei welcher der Wasserstandspegel W an eine Oberkante 29 der Halterung 6 stösst. Das Füllventil 2 weist zwei Zuflusslöcher 30, 31 auf. Solange der Wasserstandspegel W die maximale Wasserfüllhöhe H nicht erreicht hat, ist das Füllventil 2 geöffnet und es wird Wasser über die Wasserzufuhr 3 in den Schacht 7 zugeführt. Das Wasser strömt dabei aus den Zuflusslöchern 30, 31 des Füllventils 2. Eine Unterseite 32 des Schwimmers 5 schwimmt auf dem Wasser auf. Der ringförmige Schwimmer 5 ist beispielsweise aus geschlossenporigem Schaumstoff. Es ist aber auch denkbar, dass der Schwimmer 5 in Form eines annähernd viereckigen Körpers ohne zentrale Ausnehmung neben der Halterung 6 vertikal beweglich geführt ist. Weiter sind in Figur 2 die beiden beweglich miteinander verbundenen Schenkel 13, 14 dargestellt. Der erste Schenkel 13 ist mit dem Schwimmer 5 und mit dem zweiten Schenkel 14 verbunden. Der zweite Schenkel 14 schliesst über die Gelenkverbindung 15 an den ersten Schenkel 13 an. Weiter ist der zweite Schenkel 14 mit dem Füllventilkörper 12 verbunden. Der Schacht 7 ist aus einem einteiligen weiterem Element 33, beispielsweise in Form eines Hohlzylinders mit oder ohne Bodenelement 34 und dem abnehmbaren Deckel 10 ausgebildet. Das Schauglas 21 ist durch einen Durchbruch 35 an einer Oberseite 36 des Schachts 7 geführt. Der Zeiger 20 ist in einem Bereich unterhalb des Deckels 10 im Schauglas 21 positioniert, sodass einer für die Bewässerung der Pflanzen verantwortliche Person durch einen leeren aus dem Deckel 10 herausragenden Bereich des Schauglases 21 angezeigt wird, dass genügend Wasser vorhanden ist. Das Füllventil 2 ist mit an seiner Unterseite des Füllventilkörpers 12 auf die Halterung 6 aufgesteckt.

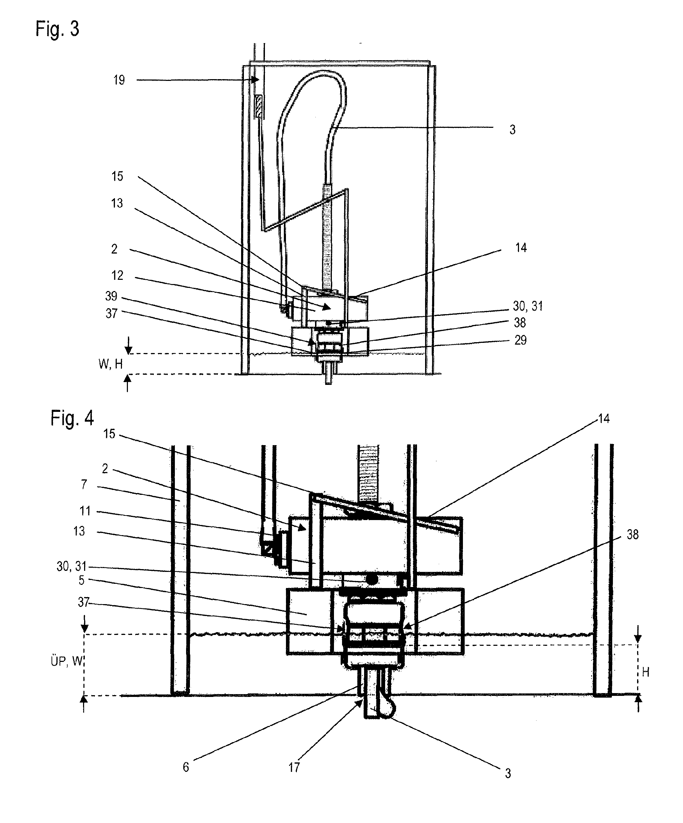

Figur 3 zeigt schematisch, ein Seitenschnitt durch eine erfindungsgemässe Bewässerungsvorrichtung bei geschlossenem Füllventil 2. Die maximale Wasserfüllhöhe H entspricht dem Wasserstandspegel W und grenzt an die Oberkante 29 der Halterung 6 an. Oberhalb der Oberkante 29 grenzt mindestens ein Abflussloch 37 ,38 an. Die Abflusslöcher 37, 38 sind in einer Aufsteckmuffe 39 des Füllventils 2 angeordnet. Weiter ist in Figur 3 der erste Schenkel 13 gezeigt, welcher oberhalb des Füllventilkörpers 12 hervorragt sowie der zweite Schenkel 14, welcher von der Gelenkverbindung 15 schräg nach unten verläuft. Das Füllventil 2 ist dabei geschlossen und über die Wasserzufuhr 3 fliesst kein Wasser mehr nach. Das Anzeigemittel 19 zeigt dem Benutzer an, dass ausreichend Wasser vorhanden ist.

Figur 4 zeigt schematisch, ein vergrösserten Ausschnitt eines Seitenschnitts durch eine erfindungsgemässe Bewässerungsvorrichtung bei starkem Regen. Dabei übersteigt der Wasserstandspegel W den für die optimal Bewässerung der Pflanzen maximal vorgesehene maximale Wasserfüllhöhe H und ist als ein Überlaufwasserpegel ÜP in Figur 4 dargestellt. Das überschüssige Wasser fliesst durch die Abflusslöcher 37, 38 der Aufsteckmuffe 39 ab. Das Füllventil 2 ist dabei geschlossen, d.h. es ist sichergestellt, dass kein Wasser, beispielsweise Trinkwasser über die Wasserzufuhr 3, in das Innere des Schachtes 7 gelangt und unnötig Wasser verbraucht wird. Bei anhaltendem Regen wird die erfindungsgemässe Bewässerungsvorrichtung allein durch die Zufuhr von Regenwasser betrieben. Weiter sind in Figur 4 ein Wandausschnitt des Schachts 7, die Schenkel 13, 14, der Gelenkverbindung 15 sowie der Füllventileinlass 11 gezeigt. Der Schimmer 5 wird in seinem unteren Bereich von Wasser überspült und soweit wie möglich in Richtung des Füllventils 2 nach oben gedrückt, d.h. soweit nach oben bis der erste Schenkel 13 an den Anschlag der Gelenkverbindung 15 gelangt. Weiter ist in Figur 4 der Schlauch 3, welcher über den Durchlass 17 der Halterung 6 in die Halterung 6 hinein geführt ist, dargestellt.

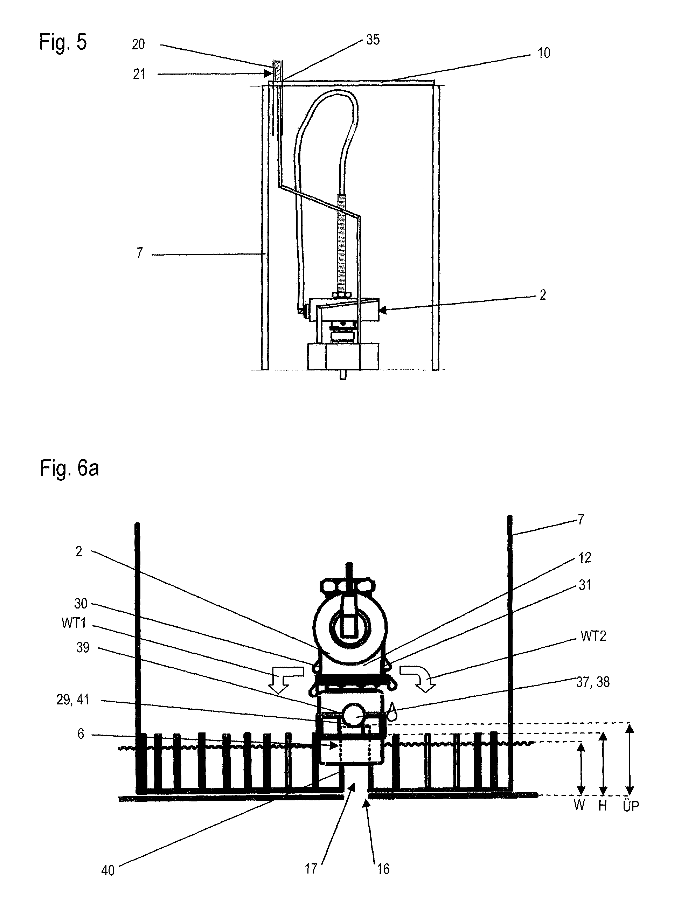

Figur 5 zeigt schematisch, ein Seitenschnitt einer erfindungsgemässen Bewässerungsvorrichtung bei einem leeren Schacht 7. Dabei ragt der Zeiger 20 aus dem für den Benutzer sichtbaren Bereich des Schauglases 21 oberhalb des Deckels 10 aus dem Durchbruch 35 hervor und zeigt dadurch dem Benutzer an, dass der Schacht 7 leer ist. Das Füllventil 2 ist mit seiner längeren Seite horizontal zum Boden des Schachtes 7 ausgerichtet. Es ist aber auch denkbar, dass das Füllventil 2 mit seiner längeren Seite vertikal Boden des Schachtes 7 angeordnet ist. Dadurch kann der Schacht 7 schmaler im Vergleich zu der horizontalen Positionierung des Füllventils 2 dimensioniert werden und der gesparte Platz kann für die Bepflanzung genutzt werden.

Figur 6a zeigt schematisch, ein vergrösserter Seitenschnitt durch eine Halterung 6 und ein Füllventil 2 einer erfindungsgemässen Bewässerungsvorrichtung. Dabei weist die Halterung 6, welche mit der Aufsteckmuffe 39 versehen ist, im Bereich der Aufsteckmuffe 39 mindestens das eine Abflussloch 37, 38 auf. Auf einer Gegenseite der Aufsteckmuffe 39 ist gegengleich das zweite Abflussloch 38 eingebracht. Der Füllventilkörper 12 des Füllventils 2 weist zwei Zuflusslöcher 30, 31 auf. Dabei sind die Abflusslöcher 37, 38 der Aufsteckmuffe 39 um ca. 90° versetzt zu den Zuflusslöchern 30, 31 des Füllventils 2 angeordnet. Es ist deutlich ersichtlich, wie aus den Zuflusslöchern 30, 31 zufliessende Wasser in den Schacht 7 gelangt (durch Pfeile WT1; WT2 markiert) und ein direktes Einfliessen in die Abflusslöcher 37, 38 verhindert bevor der Wasserstandspegel W die maximale Wasserfüllhöhe H oder den Überlaufwasserpegel ÜP beispielsweise während starkem Regen erreicht hat. Es ist auch denkbar, dass die Aufsteckmuffe 39 nur ein einziges Abflussloch 37 und das Füllventil 2 nur ein einziges Zuflussloch 30 aufweisen. Dabei ist das Abflussloch 37 der Aufsteckmuffe 39 um ca. 180° versetzt zum Zuflussloch 30 des Füllventils 2 angeordnet. Die Aufsteckmuffe 39 ist auf einen Schaft 40 der Halterung 6 aufgesteckt, derart dass das Abflussloch 37 der Aufsteckmuffe 39 mit einem unteren Lochrand 41 des mindestens einen Abflussloches 37, 38 an die Oberkante 29 der Halterung 6 respektive des Schaftes 40 grenzt. Die in Figur 6a dargestellte Halterung 6 ist hohlzylindrisch ausgebildet und an ihrer Unterseite in den Boden des Schachtes 7 integriert. Die Halterung 6 ragt aus dem Boden des Schachtes 7 nach oben ab. Der Durchlass 17 der Halterung 6 ist im Bereich der Öffnung 16 des Pflanzgefässes 1 positioniert. Sobald der Wasserstandspegel W den Überlaufwasserpegel ÜP erreicht, fliesst das überschüssige Wasser durch das mindestens eine Abflussloch 37, 38 ab und fliesst dann über die Öffnung 16 im Pflanzgefäss 1 in de darunter liegenden Untergrund ab.

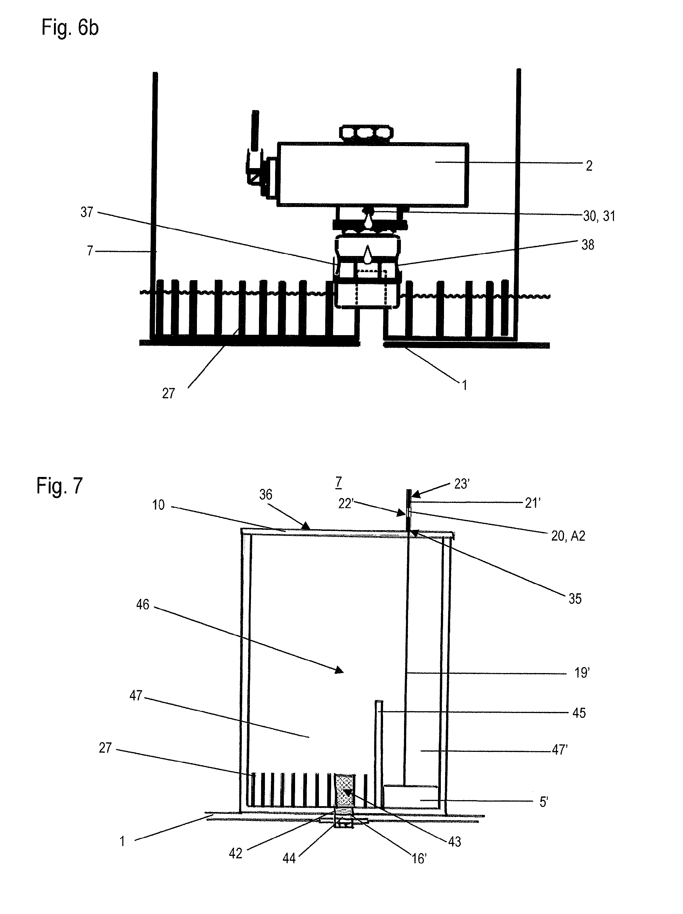

Figur 6b zeigt schematisch, ein weiterer Seitenschnitt gemäss Figur 6a. Dabei sind beide Zuflusslöcher 30, 31 des Füllventils 2 dargestellt, welche um ca. 90° versetzt zu den beiden Abflusslöchern 37, 38 angeordnet sind, sodass das aus dem Füllventil 2 austretende Wasser in das Innere des Schachtes 7 fliesst. Weiter sind die Schlitze 27 des Schachtes 7 aus Figur 6b ersichtlich sowie ein Abschnitt des Bodens des Pflanzgefässes 1.

Figur 7 stellt schematisch ein Schacht 7 für eine erfindungsgemässe Bewässerungsvorrichtung dar. Dabei weist der Schacht 7 einen abnehmbaren Deckel 10 auf. Ein anderes Anzeigemittel 19', welches mit einem anderen Schwimmer 5' direkt verbunden ist, ragt durch den Durchbruch 35 an der Oberseite 36 des Schachtes 7 heraus. Das andere Anzeigemittel 19' ist von einem anderen Schauglas 21' umschlossen. Das andere Schauglas 21' weist dabei transparente und intransparente Teile 22', 23' auf. Der Schacht 7 ist leer, d.h. ohne Wasser. Durch das transparente Teil des anderen Schauglases 21' ist ein erster Abschnitt A2 eines anderen Zeigers 20' ersichtlich. Der Boden des Schachtes 7 ist mit dem Pflanzgefäss 1 verbunden. Der Boden des Pflanzgefässes 1 weist eine weitere Öffnung 16' auf. Weiter weist der Schacht 7 eine Verbindungsöffnung 42 auf. Die Verbindungsöffnung 42 weist an ihrer Innenseite ein Gewinde auf. Es ist auch denkbar, dass die Verbindungsöffnung 42 sowohl an ihrer Innenseite wie auch an ihrer Aussenseite oder lediglich an ihrer Aussenseite ein Gewinde aufweist. Ein Sieb 43 deckt die Verbindungsöffnung 42 bzw. die darunter liegende Halterung (nicht dargestellt in Figur 7) ab. Es ist auch denkbar, dass das Sieb 43 ohne darunterliegende Halterung (nicht dargestellt in Figur 7) mit der Verbindungsöffnung 42 beispielsweise über eine Schraubverbindung mit einem Gegenstück 44 verbunden ist. Das Gegenstück 44 weist dabei ein der Verbindungsöffnung 42 und dem Sieb 43 entsprechendes Innengewinde auf. Weiter ist eine Trennwand 45 am Boden des Schachtes 7 angeordnet. Die Trennwand 45 teilt einen Innenraum 46 des Schachtes 7 dabei mindestens teilweise in zwei Bereiche 47, 47'. Weiter sind die in einem unteren Bereich der Schachtwand angeordneten Schlitze 27 des Schachtes 7 ersichtlich.

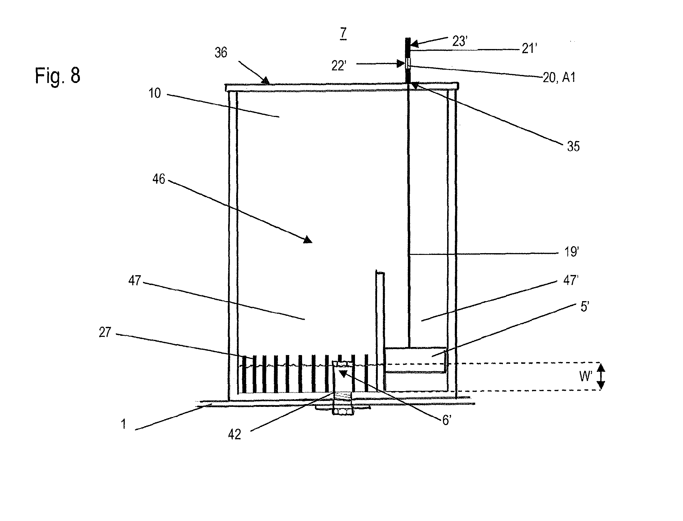

Figur 8 stellt schematisch den Schacht 7 für eine weitere erfindungsgemässe Bewässerungsvorrichtung dar. Ein Unterschied zu dem zu Figur 7 beispielhaft dargestellten Schacht 7 ist, dass eine weitere Halterung 6' in der Verbindungsöffnung 42 montiert ist. Beispielsweise über eine Schraubverbindung. Die Halterung 6' dient beispielsweise als Wasserüberlauf. Abhängig von der Höhe der Halterung 6' kann der gewünschte weitere Wasserstandspegel W' festgelegt werden. Der Schacht 7 ist bis zum weiteren Wasserstandspegel W' mit Wasser gefüllt. Der Schwimmer 5 schwimmt praktisch an einer Oberseite des weiteren Wasserstandspegel W'. Ein weiterer Unterschied zu Figur 7 ist, dass aufgrund des im Schacht 7 vorhandenen Wassers, ein zweiter Abschnitt A1 im transparenten Teil 22' des anderen Schauglases 20' ersichtlich ist.

## Patentansprüche

1. Bewässerungsvorrichtung mit einem Füllventil (2), einem Schwimmer (5) und einer Wasserzufuhr (3), **dadurch gekennzeichnet, dass** das Füllventil (2) mit einer Halterung (6) verbunden ist.

2. Bewässerungsvorrichtung nach Anspruch 1, **dadurch gekennzeichnet, dass** das Füllventil (2) auf der Halterung (6) aufgesteckt ist und wobei die Wasserzufuhr (3) über einen Durchlass (17) der Halterung (6) hindurchgeführt ist und mit dem Füllventil (2) verbunden ist oder dass das Füllentil (2) innerhalb eines Schachtes (7) montiert ist.

3. Bewässerungsvorrichtung nach Anspruch 1 oder 2, **dadurch gekennzeichnet, dass** die Halterung (6) in dem Schacht (7) positioniert ist, wobei die Halterung (6) mit einem Schachtboden verbunden ist oder wobei die Halterung (6) direkt auf einem Boden eines Pflanzgefässes (1) aufgebracht ist.

4. Bewässerungsvorrichtung nach Anspruch 2 oder 3, **dadurch gekennzeichnet, dass** der Schacht (7) einteilig oder mit zwei teleskopartig ineinander verschiebbaren Elementen (8;9) und einem abnehmbaren Deckel (10) ausgebildet ist.

5. Bewässerungsvorrichtung nach einem der Ansprüche 2 bis 4, **dadurch gekennzeichnet, dass** in einem unteren Bereich einer Schachtwand mindestens Schlitze (27) und/oder mindestens ein Verbindungsteil, insbesondere eine Muffe, ausgebildet sind.

6. Bewässerungsvorrichtung nach einem der Ansprüche 1 bis 5, **dadurch gekennzeichnet, dass** der Schwimmer (5) vertikal beweglich entlang der Halterung (6) angeordnet ist.

7. Bewässerungsvorrichtung nach einem der Ansprüche 1 bis 6, **dadurch gekennzeichnet, dass** ein Anzeigemittel (19) mit dem Schwimmer (5) verbunden ist und wobei in einem mindestens teilweise mit Wasser gefüllten Zustand des Schachtes (7) ein Zeiger (20) des Anzeigemittels (19) in einem Bereich unterhalb des Deckels (10) positioniert und bei leerem Zustand des Schachtes (7), der Zeiger (20) durch einen Durchbruch (35) an einer Oberseite (36) des Schachtes (7) geführt ist oder dass ein anderes Anzeigemittel (19') mit einem anderen Schwimmer (5') verbunden ist und wobei in einem mindestens teilweise mit Wasser gefüllten Zustand des Schachtes (7) erster Abschnitt (A1) eines anderen Zeigers (20') des anderen Anzeigemittels (19') durch den Durchbruch (35) an der Oberseite (36) des Schachtes (7) herausragt und bei leerem Zustand des Schachtes (7), ein zweiter Abschnitt (A2) des anderen Zeigers (20') durch den Durchbruch (35) an der Oberseite (36) des Schachtes (7) hervorragt, wobei der zweite Anschnitt (A2) oberhalb des ersten Abschnitts (A2) des anderen Zeigers (20') angeordnet ist.

8. Bewässerungsvorrichtung nach einem der Ansprüche 1 bis 7, **dadurch gekennzeichnet, dass** ein Verschluss des Füllventileinlasses (11) sich schliesst, sobald der Schwimmer (5) eine Oberkante (29) der Halterung (6) erreicht und dass der Verschluss des Füllventileinlasses (11) sich öffnet, sobald der Schwimmer (5) unterhalb der Oberkante (29) positioniert ist.

9. Bewässerungsvorrichtung nach einem der Ansprüche 1 bis 8, **dadurch gekennzeichnet, dass** die Wasserzufuhr (3) als Schlauch (4) ausgebildet ist, welcher über eine Öffnung (16) an der Halterung (6) zu einem Füllventileinlass (11) geführt ist.

10. Bewässerungsvorrichtung nach einem der Ansprüche 1 bis 9, **dadurch gekennzeichnet, dass** das Füllventil (2) mindestens ein Zuflussloch (30; 31) sowie mindestens ein Abflussloch (37; 39) aufweist, derart, dass das jeweilige Zuflussloch (30; 31) des Füllventils (2) zum entsprechenden Abflussloch (37; 39) versetzt angeordnet ist, insbesondere dass bei jeweils einem Zuflussloch (39; 31) und einem Abflussloch (37; 39) diese um ca. 180° versetzt zueinander oder dass bei zwei Zuflusslöchern (30; 31) und zwei Abflusslöchern (37, 39) diese um ca. 90° versetzt zueinander angeordnet sind oder dass das jeweilige mit einem Stutzen versehene Zuflussloch (39; 31) oberhalb des jeweiligen Abflusslochs (37; 39) angeordnet ist.

11. Pflanzgefäss (1), versehen mit einer Bewässerungsvorrichtung nach einem der Ansprüche 1 bis 10.

12. Pflanzgefäss (1), nach Anspruch 11, wobei das Pflanzgefäss (1) erhöht von einem Untergrund positioniert ist und wobei die Wasserzufuhr (3) über den Boden des Pflanzgefässes (1) durch eine Öffnung (16) im Pflanzgefäss (1) geführt ist und wobei die Wasserzufuhr (3) weiter über den Durchlass (17) der Halterung (6) im Boden des Schachtes (7) durch die Halterung (6) geführt ist.

13. Pflanzgefäss (1) nach Anspruch 11 oder 12, wobei das Pflanzgefäss (1) mit mindestens einem weiteren Pflanzgefäss über die Wasserzufuhr (3), insbesondere den Schlauch (4) verbunden ist.

14. Pflanzgefäss nach einem der Ansprüche 12 oder 13, **dadurch gekennzeichnet, dass** mindestens ein Teil eines Innenraums (28') des Pflanzgefässes (1) mit Drainrohren und/oder Drainmaterial ausgekleidet ist, inbesondere Steinwolle oder Schaumstoff oder Drainmatten oder Drainplatten.

15. Schacht (7) für eine Bewässerungsvorrichtung oder für ein Pflanzgefäss, wobei vorzugsweise der Schacht (7) einteilig oder mit zwei teleskopartig ineinander verschiebbaren Elementen (8; 9) und einem abnehmbaren Deckel (10) ausgebildet ist und wobei ein Boden des Schachtes eine Verbindungsöffnung (42) aufweist und/oder dass in einem unteren Bereich einer Schachtwand mindestens Schlitze (27) und/oder mindestens ein Verbindungsteil, insbesondere eine Muffe, ausgebildet sind.

16. Schacht (7) nach Anspruch 16, **dadurch gekennzeichnet, dass** eine weitere Halterung (6') mit der Verbindungsöffnung (42) verbunden ist, insbesondere verschraubt, und/oder dass die Verbindungsöffnung (42) mit einem Sieb (43) versehen ist.

17. Schacht (7) nach einem der Ansprüche 16 bis 17, **dadurch gekennzeichnet, dass** der Schacht eine Trennwand (45) aufweist und wobei innerhalb eines Bereiches (46) von zwei Bereichen (47; 47') ein mit dem Schwimmer (5) verbundenes Anzeigemittel (19) oder ein weiteres Anzeigemittel (19') angeordnet ist, wobei ein Zeiger (20) oder ein weiterer Zeiger (20') des entsprechenden Anzeigemittels (19; 19') durch einen Durchbruch (35) an einer Oberseite (36) des Schachtes (7) bis über die Oberseite (36) des Schachtes (7) führbar ist.

18. Bewässerungsvorrichtung und/oder ein Pflanzgefäss, **dadurch gekennzeichnet, dass** ein Schacht (7) nach einem der Ansprüche 15 bis 17 vorgesehen ist.
